# EUROPEAN PATENT SPECIFICATION

(11) **EP 1 219 121 B1**
(45) Date of publication and mention of the grant of the patent: **18.10.2006**
(21) Application number: 00955214.2
(22) Date of filing: 15.08.2000
(51) Int. Cl.: H04Q 7/22, H04L 12/66

(54) **SYSTEM AND METHOD OF INTERWORKING A CELLULAR TELECOMMUNICATIONS NETWORK WITH A PACKET DATA NETWORK**
SYSTEM UND VERFAHREN FÜR DAS ZUSAMMENSCHALTEN EINES ZELLULAREN TELEKOMMUNIKATIONSNETZES MIT EINEM PAKETDATENNETZ
INTERFONCTIONNEMENT DE RESEAU CELLULAIRE DE TELECOMMUNICATIONS AVEC UN RESEAU DE PAQUETS DE DONNEES ET SYSTEME A CET EFFET

(30) Priority: 31.08.1999 US 387089
(43) Date of publication of application: 03.07.2002
(73) Proprietor: TELEFONAKTIEBOLAGET LM ERICSSON (publ), 164 83 Stockholm (SE)
(72) Inventor: LUPIEN, Francis, Montreal, Quebec H2V 4J4 (CA)
(74) Representative: HOFFMANN EITLE
(86) International application number: PCT/SE2000/001579
(87) International publication number: WO 2001/017282

(56) References cited:
- EP-A- 0 869 628
- EP-A- 1 009 176
- WO-A-00/16571
- WO-A-00/28775

## Description

This invention relates to telecommunication systems and, more particularly, to a system and method of interworking a cellular telecommunications network with a packet data network.

WO 00/28775 (a reference under Article 54 (3) EPC) describes a system and method for facilitating a telecommunication subscriber connection using a domain name system. The system, which is part of a DNS server, supports connection to a mobile terminal through a data network and includes multiple connections to external devices or systems, although one or more of the connections may be serviced by a single link. The connections link the system to the data network, to a home location register ("HLR") associated with the terminal and to a mobile switch associated with the terminal. Upon initiation of a query to the DNS server through the PDN, the DNS server signals the HLR for the identification of the switch that is associated with the mobile terminal. The HLR returns an identifier for the switch and the DNS server then requests the switch to provide an address for the mobile terminal. The switch establishes a connection with the mobile terminal and provides a temporary address through a network interface system such as an interworking function. The switch then returns this new address to the DNS server.

WO 00/16571 (a reference under Article 54 (3) EPC) describes a telecommunications service node connected to a data network using a packet data protocol and a telephone network using a circuit switched protocol. The service node is also connected to a wireless roaming network using the IS-41 signalling protocol. The service node stores status information, including location and registration information, for mobile computing devices connected to the data packet network. The location information includes a temporary data network address for visiting mobile computing devices. The service node manages voice calls to and from the mobile computing devices. If a call is received to a mobile computing device which is not registered, the service node will attempt to connect the call to a wireless telephone associated with the mobile computing device, or a predefined destination established as a preference by the user. In the case of a voice call between a telephone connected to the telephone network and a mobile computing device connected to the data network, the service node acts as a gateway and translates between the data packet protocol and the circuit switched protocol. A personal information manager executing in a mobile computing device may be used for managing call processing functions of the mobile computing device.

EP 0 869 628 describes a mobile telephone (UT 1) configured for dual mode operation, so as to communicate either via an earth-orbiting satellite with a satellite network or through a conventional land-based cellular network. In order to provide interworking between the satellite network and the land, cellular network, an interworking function provides data to the cellular network concerning the location of the user terminal in relation to the satellite network. The data is transmitted from the satellite visitor location register to the home location register of the cellular network. The IWF maintains a list of roaming subscribers provisioned with services which are specific to the visited network and not available in the home network. The IWF is configured to operate with local GSM, DAMPS, PHS or other local land-based networks, depending on the geographic location of the SAN.

EP 1 009 176 A2 (a reference under Article 54 (3) EPC) describes a route optimisation technique in a GPRS network including establishing a gateway GPRS support node in a visiting public land mobile network in which a roaming mobile station is currently located. Specifically, a tunnel is formed between the gateway GPRS support node and a serving GPRS support node to which the mobile station is in direct communication over a radio link. In this manner, external corresponding hosts may route packets to the gateway GPRS support node, rather than the GPRS support node in the mobile station's home public mobile network. Advantageously, a shorter path is established for transfer of packets between a mobile station and a corresponding host. A similar route optimisation technique is provided in a CDPD network, wherein a home mobile data-intermediate system node (local HMD-IS) in the foreign (visiting) network serves as a gateway node to the roaming mobile-end system.

Traditionally, access to a Packet Data Network (PDN) from a cellular network has been performed by establishing an analog modem connection for calls both terminating and originating at a mobile terminal. This type of access was introduced with cellular Asynch-data services, allowing an analog connection towards a PDN. ANSI-41 circuit-mode originating and terminating data services that allow analog modem interwork are accomplished by dialing a far-end modem and performing an RLP1-to-analog Pulse Code Modulation (PCM) conversion with an Interworking Unit (IWU).

Today, in ANSI-136 cellular telecommunications networks, Cellular Digital Packet Data (CDPD) wireless access utilizes the cellular frequencies, and is typically implemented as an overlay to the "analog" and "digital" IS-136 access. CDPD Mobile Data Base Stations (MDBSs) provide the radio access. Typically MDBSs share transmission facilities with the ANSI-136 base stations, and access to the CDPD operator network is accomplished through a semi-permanent circuit-switched connection through the mobile switching center (MSC).

Other digital methods of connecting to a PDN are currently under development, and are anticipated to make more efficient use of the transmission by utilizing a digital connection towards a cellular Internet access gateway for direct access to the Internet from an MSC. The unit performing the direct access gateway function may be referred to as a Direct Access Unit (DAU). During such an access, the DAU manages the Internet Protocol (IP) connection with the target data network which may be, for example, a corporate/private network or an Internet Service Provider (ISP). However, even when accessing a data network using a digital connection through a DAU, a dial-in circuit-switched connection must still be established towards the DAU, and the connection to the DAU only lasts for the duration of a particular task to be performed. For example, if a mobile subscriber desires to retrieve his e-mail messages, the subscriber must dial in to the data network, retrieve his e-mail, and then release the circuit-switched connection when he is finished with the task. Thereafter, the mobile subscriber cannot be reached by a correspondent host, whether by means of a terminating data call or otherwise, since the circuit-switched connection has been released.

There are no known prior art teachings of a solution to the aforementioned deficiency and shortcoming such as that disclosed herein. In order to overcome the disadvantage of existing solutions, it would be advantageous to have a system and method of making a digital connection from a cellular network to a data network in which, once a mobility context has been established in the data network, the circuit-switched connection can be released, and mobile-terminating data calls can still be delivered to the mobile terminal.

According to a first aspect of the invention, there is provided a method of interworking a cellular telecommunications network with a packet data network comprising the steps of: establishing a circuit-switched connection from a mobile terminal operating in the cellular network to the data network; conducting a registration process in the data network for the mobile terminal; establishing in the data network, a mobility context for the mobile terminal; maintaining the mobility context for the mobile terminal in the data network even if the circuit-switched connection is released; and when a mobile-terminating data call is received in the data network, re-establishing the circuit-switched connection based on the mobility context maintained in the data network to deliver the call to the mobile terminal.

According to a second aspect of the invention, there is provided a system for interworking a cellular telecommunications network with a packet data network, said system comprising: means for establishing a circuit-switched connection from a mobile terminal operating in the cellular network to the data network; registration means for registering the mobile terminal in the data network; means for establishing in the data network a mobility context for the mobile terminal; means for maintaining the mobility context for the mobile terminal in the data network even if the circuit-switching connection is released; and means for receiving a mobile-terminating data call, wherein the means for establishing the circuit-switched connection is further operable to re-establish the circuit-switched connection based on the mobility context maintained in the data network to deliver the call to the mobile terminal upon receipt of the mobile-terminating data call at the means for receiving a mobile-terminating data call.

The invention will be better understood and its numerous objects and advantages will become more apparent to those skilled in the art by reference to the following drawings, in conjunction with the accompanying specification, in which:
FIG. 1 (Prior Art) is a simplified block diagram of a digital connection from a mobile terminal through a direct access gateway to a data network;
FIG. 2 is a simplified block diagram of an Internet cellular access gateway connecting a mobile terminal with a data network in the preferred embodiment of the present invention;
FIG. 3 is a simplified block diagram illustrating the connection of a cellular network to a data network in the preferred embodiment of the present invention;
FIG. 4 is a simplified block diagram illustrating the connection of a cellular network to a data network in an alternative embodiment of the present invention; and
FIG. 5 is a simplified block diagram illustrating the connection of a cellular network to a data network when a plurality ofMSCs are serving mobile terminals, and none of the serving MSCs are the Direct Access Node (DAN).

The following describes a system for interworking a cellular telecommunications network with a packet data network. The system includes means for establishing a circuit-switched connection from a mobile terminal to the data network, and registration means for registering the mobile terminal in the data network. The system also includes means for establishing in the data network, a mobility context for the mobile terminal, and means for maintaining the mobility context for the mobile terminal in the data network even if the circuit-switched connection is released. Thereafter, if a mobile-terminating data call is received in the data network, the system includes circuit-switched connection means for reestablishing a connection to the mobile terminal for delivery of the data call.

The following also describes a method of interworking a cellular telecommunications network with a packet data network. The method includes the steps of establishing a circuit-switched connection from a mobile terminal operating in the cellular network to the data network, and conducting a registration process in the data network for the mobile terminal. This is followed by establishing in the data network, a mobility context for the mobile terminal, and maintaining the mobility context for the mobile terminal in the data network even if the circuit-switched connection is released. Thereafter, if a mobile-terminating data call is received in the data network, the circuit-switched connection is reestablished, and the call is delivered to the mobile terminal.

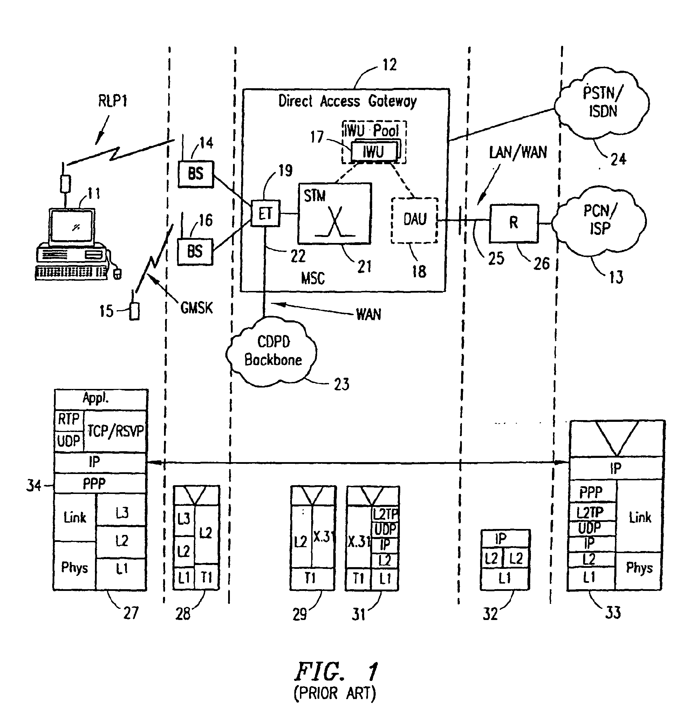

FIG. 1 is a simplified block diagram of an existing digital connection from a mobile terminal 11 through a direct access gateway 12 to a packet data network (PDN). A PDN can be represented by a wide area network (WAN) infrastructure with connections to ISPs and/or to private/corporate networks (PCNs) or ISP 13. FIG. I illustrates a first mobile terminal 11 which communicates with a serving base station (BS) 14 through, for example, a Radio Link Protocol such as RLP1 for the ANSI-136 air interface. Also illustrated is a second mobile terminal 15 which communicates with a serving BS 16 through the Gaussian Modulated Shift Key (GMSK) air interface physical layer utilized in the Cellular Digital Packet Data (CDPD) system. CDPD wireless access utilizes the cellular frequencies, and is typically implemented as an overlay to the "analog" and "digital" IS-136 access. The base stations, in turn, are connected to the gateway 12.

The direct access gateway 12 is essentially a mobile switching center (MSC) with a pool of Interworking Units (IWUs) 17 and a Direct Access Unit (DAU) 18. The DAU may be remote or co-located with the MSC, and may function as an access server, Point-to-Point (PPP) relay, or an IP relay to the PCN/ISP 13 through a local area network (LAN) or a wide area network (WAN). Signaling and traffic from the base stations enter the gateway through an exchange terminal (ET) 19 and are routed through switching and control functions (STM) 21. A WAN connection 22 may link the ET to a CDPD network backbone 23. The gateway 12 may also be connected to the Public Switched Telephone Network (PSTN) or an Integrated Services Digital Network (ISDN) 24. The DAU provides a Local Area Network (LAN) or WAN connection 25 utilizing an Ethernet and/or Frame Relay interface through a router (R) 26 to the PCN/ISP 13. The DAU also provides support for the Internet Engineering Task Force (IETF) standard for PPP tunneling, called the Layer 2 Tunneling Protocol (L2TP). The L2TP standard handles security and authentication functions, and may be utilized to enhance private network access security when accesses are through, for example, a public ISP.

Protocol stacks 27-33 correspond to each of the nodes illustrated above each stack. As shown in the protocol stack 31, the DAU 18 encapsulates PPP frames 34 from the mobile terminal 11 with either Telnet, the Transaction Control Protocol (TCP), or L2TP. These are then routed to the PCN/ISP 13. The connection to the DAU is realized through a dial-up circuit connection (pre-defined route) with a 64 kbps Unrestricted Digital Information (UDI). UDI allows the passing of X.31 High level Data Link Control (HDLC) flag stuffing unaffected to a remote or co-located DAU. The allowed format on the 64 kbps UDI is exclusively X.31 HDLC flag stuffing (i.e., bit-synchronous HDLC framing). Support is also provided for mobile call origination and termination to/from Integrated Services Digital Network (ISDN) terminal equipment (TE).

Digital connections from a cellular network toward an Internet access gateway or Direct Access Unit (DAU), make more efficient use of the transmission. During such an access, the DAU manages the Internet Protocol (IP) connection with the target data network which may be, for example, a corporate network or an ISP. This functionality allows mobile subscribers to originate digital calls (without an analog modem) directly to an ISP without requiring the setup time for modem training and handshaking.

Using existing procedures for routing of IP datagram traffic from a PDN to a mobile terminal, a certain degree of interaction between the PDN and the cellular mobility management procedures is required. Mobile IP (IPv4, IPv6) and cellular packet radio networks such as CDPD or the General Packet Radio Service (GPRS) introduce the concept of mobility through system specific algorithms with tailored wireless data link protocols. Examples include MobIPV4 home agents (HA) and foreign agents (FA), and CDPD's Mobile Home Function (MHF)/Mobile Visiting Function (MVF) with the Sub-Network Dependence Convergence Protocol (SNDCP)/Mobile Data Link Protocol (MDLP). SNDCP is a convergence layer protocol between IP and MDLP which performs sub-network functions. The fixed network routes datagrams to the subscriber's known current "point-of-attachment" (i.e. the FA or MVF), which then relays the datagrams to the mobile terminal using system-specific wireless link protocols.

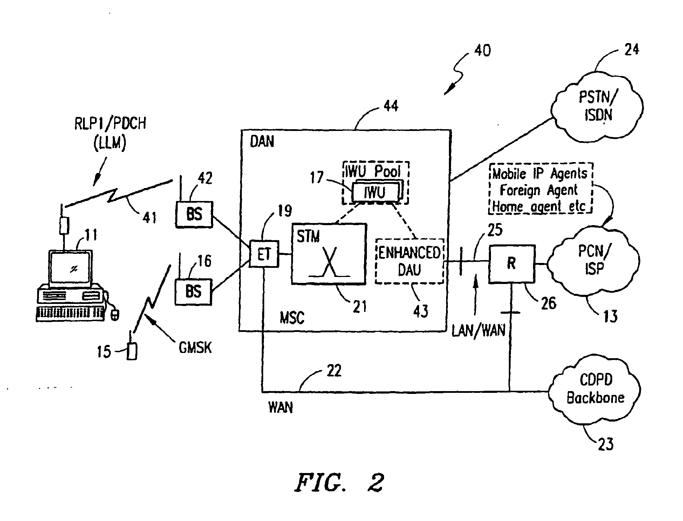

FIG. 2 is a simplified block diagram of an Internet cellular access gateway 40 connecting a mobile terminal 11 with a data network (PCN/ISP) 13 in the preferred embodiment of the present invention. This embodiment reduces the utilization of circuit-switched resources (RF and trunks) for access to the PCN/ISP from the cellular infrastructures when based on a digital direct access method (connection from the mobile terminal to the DAU). The PCN/ISP/CDPD access is enhanced with a variety of radio channel types (bearers) which provide a greater level of interoperability with the existing radio access bearer services. The bearers include existing circuit-switched bearers and access through a Time Division Multiple Access (TDMA) packet data channel (PDCH) 41 providing multi-userpacket mode radio access through a suitable base station 42. The channel may be provisioned as a whole channel (30kHz) dedicated to the TDMA packet channel. This is similar to the CDPD GMSK channel. Transport is also dedicated so the channel is transparent to the switching application. A multi-slot channel (1FR, 2FR, 3FR) may also be allocated to the TDMA packet data channel, to better utilize the slot aggregates with respect to demand for the different traffic types.

The present invention utilizes a higher level of integration of PDN access functions in the cellular infrastructures to allow mobile terminating packet delivery through a switched connection from an enhanced DAU 43 to the mobile terminal. It also makes better use of circuit-switched resources in the cellular network by allowing the circuit-switched connection to be released while maintaining registration with the PCN/ISP 13. The present invention modifies the DAU so that the mobile subscriber can release the circuit-switched connection and still be connected at the session level to the PCN/ISP. When the mobile subscriber originates a digital direct access call, a mobility context is established in the PCN/ISP regarding the mobile subscriber's location. Once the DAU and the PCN/ISP have the subscriber's location, then the subscriber does not have to maintain the circuit-switched call to the DAU to maintain the connection for mobile-terminating calls. The subscriber can register and then release the circuit-switched part of the connection. Thereafter, if a data call needs to be delivered from the PCN/ISP to the mobile terminal, a circuit-switched connection can be reestablished since the PCN/ISP has the subscriber's location (mobility context). Meanwhile, the circuit-switched resources can be utilized for other calls.

For example, if a party wants to send the mobile terminal a fax over IP, the PDN, through the stored mobility context and the present invention, locates which MSC and which Direct Access Node (DAN) 44 to use to reach the mobile subscriber. The DAN is the MSC which includes the enhanced DAU 43 in which the mobile subscriber has established his mobility context. If the mobile subscriber moves to a new MSC or DAN, his mobility context is updated. One method of mobility management is for the mobile subscriber to originate a digital direct access call, thereby setting up a mobility context. This registers the mobile subscriber in the PCN/ISP 13. When that is done, the circuit-switched connection can be released.

When the mobile subscriber is connected to the data network, the physical connection can be lost, and the subscriber is still connected at the session level. The present invention uses this principle to optimize the use of circuit-switched resources. The circuit-switched resources are only used when needed. The circuit-switched circuit is released when not in actual use. If a terminating data call is then received for the mobile subscriber, the DAU 43 establishes a circuit-switched connection toward the mobile terminal, and the call is delivered.

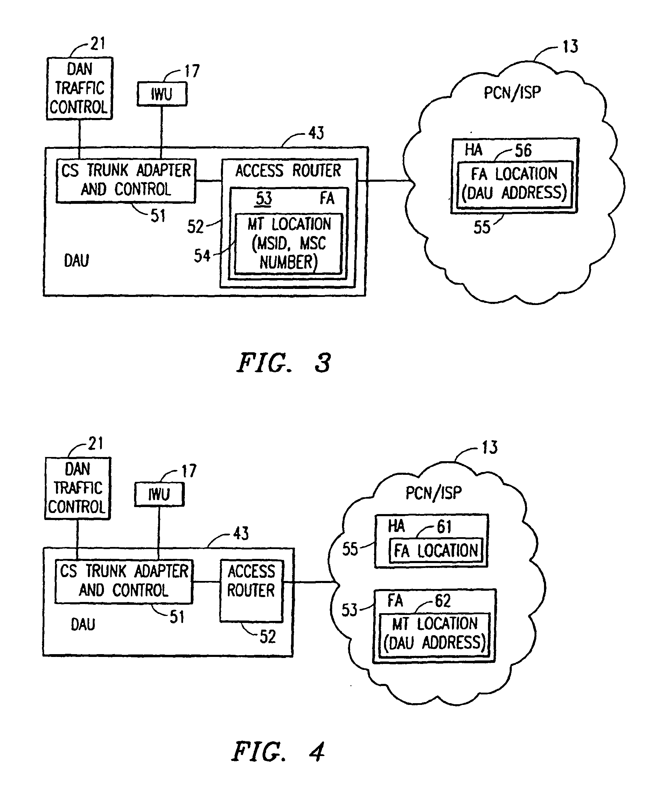

FIG. 3 is a simplified block diagram illustrating the connection of a cellular network to a data network utilizing the preferred embodiment of the enhanced Direct Access Unit (DAU) 43. The DAU is shown with connections to the PCN/ISP 13, the IWU pool 17, and to the traffic switching and control functions 21 in the DAN 44 (see FIG. 2). The DAN traffic control functions are essentially equivalent to the functionality which exists today in the MSC for controlling circuit-switched (CS) call delivery to the mobile subscriber. A CS trunk adapter and control function 51 connects the traffic control functions and the IWU pool to an access router (access server) 52. A control part of the CS trunk adapter and control function interfaces with the DAN traffic control function 21 to set the CS terminating call, i.e., to select an TWU from the pool if the serving MSC is the DAN, and to route the call to the serving MSC if the serving MSC is different from the DAN. If the DAU is not located in the serving MSC (i.e., the serving MSC is not the DAN), then the DAN traffic control function performs routing functions with ISUP signaling. In this case, the serving MSC performs the IWU selection rather than the DAN.

A Foreign Agent (FA) 53 is implemented in the access router 52. The FA stores the identity and location 54 of the mobile terminal (e.g., MSID and serving MSC number) since the MSC/VLR with the IWU may not be the same node as the DAN 44. This enables call routing to the serving MSC without ANSI-41 signaling to determine the mobile terminal's location. A Home Agent (HA) 55 is preferably implemented in the PCN/ISP 13. The HA stores the location 56 of the FA (DAU IP address) according to IPv4. If the FA location changes, the FA informs the HA of the FA's new address. This address is later used by the PCN/ISP to tunnel the PPP frames to the DAU 43. If the circuit-switched connection to the mobile terminal has been released, and a terminating call is received for the mobile terminal from the PCN/ISP, the CS trunk adapter and control function 51 reestablishes the connection based on the mobile terminal location provided by the FA.

The operation of the present invention will be described in detail below, first for delivery of a mobile terminating packet from the PCN/ISP 13 through the DAU 43, and second, for delivery of a mobile terminating packet from the CDPD network 23 through the DAU.

### Mobile terminating packet delivery from PCN/ISP through DAU

The PCN/ISP 13 is responsible for the implementation of the required mobile IP agents for Internet access support (e.g., home agents, foreign agents, etc.). Handling of security and authentication is also handled by the PCN/ISP.

### Mobility Management:

Mobility management is handled by home agents (HA) and foreign agents (FA). The FA 53 is preferably implemented in the DAU 43, and the HA 55 is preferably implemented in the PCN/ISP 13. Mobile Internet subscribers are tasked with keeping the mobile Internet network aware of their location in the wireless network through a registration process.

Mobile registration is performed by the mobile terminal launching a transaction towards the PCN/ISP network. The registration is forwarded to the network through a system specific protocol (e.g., CDPD, IPv4, GPRS) in the mobile terminal, and a specific Packet Data Unit (PDU) is issued to the routing layer.

The MSCid and DAU addresses are maintained by the network(s). The HA 55 typically stores the FA location 56 (DAU IP address) according to IPv4. If the FA location changes, the FA informs the HA of the FA's new address. This address is later used by the PCN/ISP 13 to tunnel the PPP frames to the DAU 43. The FA 53 stores the identity and location 54 of the mobile terminal (MSID and MSC number, etc.) since the MSC/VLR with the IWU 17 may not be the same node as the DAN 44.

A registration access may be performed with two different radio access mechanisms when no prior MS-DAU circuit exists. The mobile terminal first sets up a dial-up direct access connection (64 kbps UDI, X.31 etc.) from an IWU 17 to the DAU 43, This may be done using either an RLP1 circuit to the MSC IWU, or through a TDMA packet data channel which uses the IWU to multiplex/demultipex accesses. For transactions using RLP1, a PPP connection is established from the mobile terminal to the PCN/ISP 13 by setting up an RLP1 circuit-mode connection from the mobile terminal to the IWU (transcoder unit (TRAB) may be in the path). For transactions using the packet data channel, a PPP connection is established by launching a packet channel transaction. Transfer protocols are then invoked from the transceiver to an IWU. The transceiver's data network protocol (DNP) and ISLP are candidates for such protocols assuming a TRAB is always semi-permanently connected to a transceiver. The direct access call to the DAU is established using a prefix number that is used by the routing procedures and that identifies this type of call. The DAU prefix number must either be implicit (generated by the IWU or MSC) or forwarded by the mobile terminal.

Once the radio access is set-up, the direct access connection from the IWU 17 to the DAU 43 is established using the DAU prefix number. Once the ISDN X.31 connection is established to the DAU, the DAU sets up a connection to the PCN/ISP 13 to relay the PPP frame using a tunneling method. The registration PDU is then routed through the PCN/ISP. The IWU's node address must be forwarded (via ISUP signaling) to the DAU in the DAN. The serving MSC number must be stored in the DAU. The DAU's FA 53 notes and stores the originating node address. The transaction is processed by the FA which relays it to the HA 55.

The circuit-switched connection between the mobile terminal and the DAU 43 may be released once transactions between the mobile terminal and the PCN/ISP 13 are no longer required (for example, timeout) in order to reduce the use of circuit-switched resources. However, the mobile terminal remains registered in the PCN/ISP (FA and HA).

### Mobile Terminating Packet Routing:

The FA 53 at the DAU and the HA 55 at the PCN/ISP are responsible for routing datagrams to the mobile terminal when the subscriber is roaming in the cellular network. Datagrams addressed to the mobile terminal are tunneled and processed by the HA. The HA is responsible for transmitting these datagrams by ordering the setting up of a PPP connection to the appropriate DAU (in the DAN 44). The DAU address is maintained by the HA through the registration process described above.

The FA 53 in the DAU is responsible for triggering the establishment of a trunk from the DAN 44 to the IWU 17, whether these are in the same node or not. The FA provides the destination address or MSC number. A dial-up direct access connection with 64 kbps UDI X.31 is set up between the DAU and the IWU to relay the datagrams from the DAN to the IWU in the serving MSC. Either an RLP 1-to-UDI X.31 protocol adaptation or a PCCH PDUs-to-64 kbps UDI X.31 protocol adaptation can be set in the IWU for communication with the base station. The details are described below for each method when no prior MS-DAU circuit exists.
1) Transactions using RLP1: A PPP connection is established by the PCN/ISP 13 to the DAU 43 using a tunneling method to relay the PPP frames. Once this connection is established, a call from the DAN/DAU to the serving node IWU 17 is performed using a direct access connection by setting up a X.31 over 64 kbps UDI. If the DAU is not located in the serving MSC (i.e., the serving MSC is not the DAN), then the DAN traffic control function performs routing functions with ISUP signaling. In this case, the serving MSC performs the IWU selection rather than the DAN. In order to route the call to the serving MSC, a prefix is added to the routing number to indicate that the call is an IWU call. The incoming call to the serving MSC triggers the locating of the mobile terminal, and the establishment of an RLP1 circuit-mode connection from the mobile terminal to the IWU (TRAB may be in the path.) Once an end-to-end ISP-to-mobile terminal connection is established, datagrams are delivered to the mobile terminal.
2) Transactions using a packet data channel: Procedures are similar to the above, with the exception that once the ISP-to-DAU and DAU-to-IWU connection is established, the mobile terminal is located and an IWU-TRAB-transceiver connection is established. DNP and ISLP transfer protocols may be utilized, assuming a TRAB is always semi-permanently connected to a transceiver. The IWU protocol-adapts the X31 frames to packet data channel PDUs. Once an end-to-end ISP-to-mobile terminal connection is established, datagrams are delivered to the mobile terminal.

### Mobile terminating packet delivery from CDPD network through DAU

The CDPD service provider has a role similar to that of the PCN/ISP 13. The CDPD service provider is responsible for implementing the Standard defined by the CDPD forum. The Standard defines the handling of mobility via mobile visiting functions (MVF), mobile home functions (MHF), security, and authentication, etc.

### Mobility Management and Security:

Mobility is handled by the Mobile Data Intermediate System (MD-IS) home and serving functions. Two connectionless protocols, the Radio Resource Management Protocol (RRMP) and the Mobile Network Registration Protocol (MNRP), handle the relay of mobility information from the mobile terminal to the serving MD-IS. The MNRP works in conjunction with a Mobile Network Location Protocol (MNLP) to verify the subscriber's network entity identifier (NEI), a security ID used to monitor and confine service to authorized users. The Security Management Protocol (SMP) handles the security services to the CDPD network such as data link confidentiality, authentication, key management, access control, etc. These services operate over an SNDCP/MDLP/MAC or SNDCP/MDLP/Packet channel protocol stack.

Mobile registration is performed by the mobile terminal launching a transaction toward the CDPD network. This transaction is processed by the MVF in the serving MD-IS. The MVF is responsible for informing the MHF in the home MD-IS of the subscriber's current MVF location.

The serving MSC number of the subscriber's location is preferably maintained in the DAU 43 if the MSC and DAN 44 are not the same nodes. The DAU address is kept by the MVF. This address is later used by the MVF to tunnel the MDLP frames to the DAU. These are then used to set up the direct access connection for the packet delivery.

The mobile terminal transmits RRMP or MNRP protocol packets by setting up a dial-up direct access connection (64 kbps USI, X.31 etc.) to the CDPD network through the DAU 44 either with an RLP1 circuit to an MSC IWU 17 or through the TDMA packet data channel. If the lower layers such as SNDCP and MDLP are already connected, the PDU is forwarded directly. Otherwise, the following procedures are utilized.
1) Transactions using RLP1 : An MDLP connection is established by setting up an RLP1 circuit-mode connection from the mobile terminal to the IWU 17 (TRAB may be in the path) and a direct access connection from the IWU to the DAU 43 by dialing a DAU short code or prefix number. Once the ISDN X.31 connection is established to the DAU, the DAU sets up a connection to the serving MD-IS to relay the MDLP frame using a tunneling method (TP4, L2TP, FrameRelay, etc.). The physical connection between the DAU and the MD-IS may either be an unstructured DS0 or an Ethernet connection. The RRMP/MNRP/SMP PDU is then routed through the serving MD-IS.
2) Transactions using the PCCH: A MDLP connection is established by launching a packet channel transaction. Transfer protocols are then invoked from the transceiver to an IWU 17. DNP and ISLP protocols may be utilized, assuming a TRAB is always semi-permanently connected to a transceiver. The DAU prefix number must either be implicit (generated by the IWU or MSC) or forwarded by the mobile terminal. A direct access connection from the IWU 17 to the DAU 43 is established using the DAU prefix number. Once the ISDN X.31 connection is established to the DAU, the DAU sets up a connection to the serving MD-IS to relay the MDLP frames using a tunneling method. The RRMP/MNRP/ SMP PDU is then routed through the serving MD-IS.

When the IWU-to-DAU connection is established, the IWU's node address must be forwarded (via ISUP signaling) to the DAU 43 in the DAN 44. The originating calling number address or serving MSCid must be stored.

### Mobile Terminating Packet Routing:

The home and visiting MD-ISs are responsible for routing datagrams to a mobile terminal when the subscriber is roaming in the cellular network. Datagrams addressed to this subscriber are processed and tunneled by the MVF and MHF. The MVF in the serving MD-IS is responsible for tunneling/transmitting these datagrams using the MDLP connection to the subscriber through the appropriate DAU 43 (in a DAN 44). The DAU address is maintained by the MD-IS MVF through the registration process described above. Either a dial-up direct access connection with RLP1-to-X.31 protocol adaptation or a PCCH PDUs-to-64 kbps UDI X.31 protocol adaptation may be set-up to relay the datagrams. The DAU 43 is responsible for triggering the establishment of a trunk from the DAN 44 to the IWU 17. The DAU provides the serving MSC number. The details are described below for each method.
1) Transactions using RLP1**:** A connection is established by the MD-IS MVF to the DAU using a tunneling method to relay the MDLP frames. Once this connection is established, a call from the DAN/DAU to the serving node IWU is performed using a direct access connection by setting up a X.31 over 64 kbps UDI. If the DAU is not located in the serving MSC (i.e., the serving MSC is not the DAN), then the DAN traffic control function performs routing functions with ISUP signaling. In this case, the serving MSC performs the IWU selection rather than the DAN. In order to route the call to the serving MSC, a prefix is added to the routing number to indicate that the call is an IWU call. The incoming call to the serving MSC triggers the locating of the mobile terminal, and an RLP1 circuit-mode connection is established from the mobile terminal to the IWU (TRAB may be in the path). Once an end-to-end serving MD-IS-to-mobile terminal connection is established, the datagrams are delivered to the mobile terminal.
2) Transactions using the packet data channel: Procedures are similar to the above, with the exception that once the ISP-to-DAU and DAU-to-IWU connection is performed, the mobile is located and an IWU-TRAB-transceiver connection is established. DNP and ISLP transfer protocols may be utilized, assuming a TRAB is always semi-permanently connected to a transceiver. The IWU protocol-adapts the X.31 frames to packet data channel PDUs. Once an end-to-end serving MD-IS-to-mobile terminal connection is established, datagrams are delivered to the mobile terminal.

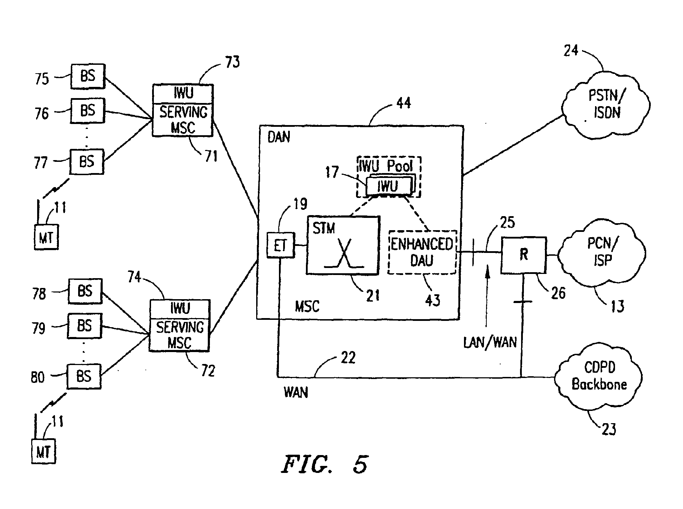

FIG. 4 is a simplified block diagram illustrating the connection of a cellular network to a data network in an alternative embodiment of the present invention. In this embodiment, the configuration is essentially the same as FIG. 3 except that the FA 53 is located in the PCN/ISP 13 rather than the DAU access router 52. The HA 55 is also in the PCN/ISP, and includes an indication of the FA's location in the PCN/ISP. The FA includes, as an indication of the mobile terminal's location, the DAU address 62, and is responsible for initiating the tunneling connection towards the DAU 43. The CS trunk adapter and control function 51 also supports terminating call establishment by triggering the call delivery process from the DAN 44.

FIG. 5 is a simplified block diagram illustrating the connection of a cellular network to a data network when a plurality ofMSCs are serving mobile terminals, and none of the serving MSCs are the DAN. Serving MSC 71 and serving MSC 72 are connected to the DAN 44. Serving MSC 71 includes IWU 73, and serving MSC 72 includes IWU 74. In addition, serving MSC 71 is shown connected to a plurality of base stations (BS) 75-77, and serving MSC 72 is shown connected to BSs 78-80. As noted above, If the serving MSC is not the DAN (i.e., the DAU is not located in the serving MSC, then the DAN traffic control function performs routing functions with ISUP signaling. In this case, the serving MSC performs the IWU selection rather than the DAN. In order to route the call to the serving MSC, a prefix is added to the routing number to indicate that the call is an IWU call. The incoming call to the serving MSC triggers the locating of the mobile terminal, and the establishment of an RLP1 circuit-mode connection from the mobile terminal to the IWU. Once an end-to-end ISP-to-mobile terminal connection is established, datagrams are delivered to the mobile terminal.

It is thus believed that the operation and construction of the present invention will be apparent from the foregoing description. While the system and method shown and described has been characterized as being preferred, it will be readily apparent that various changes and modifications could be made therein without departing from the scope of the invention as defined in the following claims.

## Claims

1. A method of interworking a cellular telecommunications network with a packet data network (13) comprising the steps of:
establishing a circuit-switched connection from a mobile terminal (11) operating in the cellular network to the data network (13);
conducting a registration process in the data network (13) for the mobile terminal (11);
establishing in the data network (13), a mobility context for the mobile terminal;
maintaining the mobility context for the mobile terminal (11) in the data network (13) even if the circuit-switched connection is released; and
when a mobile-terminating data call is received in the data network, re-establishing the circuit-switched connection based on the mobility context maintained in the data network (13) to deliver the call to the mobile terminal.

2. The method of interworking a cellular telecommunications network with a packet data network of claim 1 wherein the step of establishing a mobility context for the mobile terminal (11) includes the steps of:
storing in a foreign agent, location information for the mobile terminal (11); and
storing in a home agent in the data network, an address for the foreign agent.

3. The method of interworking a cellular telecommunications network with a packet data network of claim 2 further comprising the steps of:
originating a data call in the data network (13) addressed to the mobile terminal (11);
determining whether the circuit-switched connection has been disconnected;
establishing a circuit-switched connection to the mobile terminal (11) using the location information stored in the foreign agent, upon determining that the circuit-switched connection has been disconnected; and
delivering the data call to the mobile terminal (11).

4. A system for interworking a cellular telecommunications network with a packet data network (13), said system comprising:
means for establishing a circuit-switched connection from a mobile terminal (11) operating in the cellular network to the data network (13);
registration means for registering the mobile terminal (11) in the data network (13);
means for establishing in the data network (13) a mobility context for the mobile terminal (11);
means for maintaining the mobility context for the mobile terminal (11) in the data network (13) even if the circuit-switching connection is released; and
means for receiving a mobile-terminating data call, wherein the means for establishing the circuit-switched connection is further operable to re-establish the circuit-switched connection based on the mobility context maintained in the data network (13) to deliver the call to the mobile terminal upon receipt of the mobile-terminating data call at the means for receiving a mobile-terminating data call.

5. The system for interworking a cellular telecommunications network with a packet data network of claim 4 wherein the means for establishing a mobility context for the mobile terminal includes:
a foreign agent (53) operable to store location information for the mobile terminal (11); and
a home agent in the data network (13) operable to store an address for the foreign agent.

6. The system for interworking a cellular telecommunications network with a packet data network of claim 5 further comprising:
means in the data network (13) for determining that a data call is addressed to the mobile terminal (11);
means for determining whether the circuit-switched connection has been disconnected;
further circuit-switched connection means for establishing a connection to the mobile terminal (11) using the location information (54) stored in the foreign agent (53), upon determining that the circuit-switched connection has been disconnected; and
means for delivering the data call to the mobile terminal (11).

7. The system for interworking a cellular telecommunications network with a packet data network of claim 6 wherein the system includes a direct access node (44) between the mobile terminal (11) and the data network (13), the direct access node (44) comprising:
a serving mobile switching center MSC (44) connected through a base station (42) to the mobile terminal (11);
an interworking unit IWU (17) connected to the MSC (44); and
a direct access unit DAU (43) connected to the IWU (17) and to the data network (13).

8. The system for interworking a cellular telecommunications network with a packet data network of claim 7 wherein the DAU (43) also includes an access router (52), and the foreign agent (53) is implemented in the access router (52).

9. The system for interworking a cellular telecommunications network with a packet data network of claim 8 wherein the mobile terminal location information (54) to be stored by the foreign agent (53) is an MSC number for the serving MSC.

10. The system for interworking a cellular telecommunications network with a packet data network of claim 8 wherein the DAU (43) also includes a circuit-switched adapter and control function means (51) arranged to connect the IWU and a traffic control function means (21) in the direct access node (44) to the access router (52).

11. The system for interworking a cellular telecommunications network with a packet data network of claim 10 wherein the IWU (17) is one of a plurality of IWUs in an IWU pool, and the circuit-switched adapter and control function means (51) includes a control part arranged to interface with the traffic control function means (21) to select an IWU (17) from the IWU pool if the serving MSC is the direct access node (44).

12. The system for interworking a cellular telecommunications network with a packet data network of claim 11 wherein the control part of the circuit-switched adapter and control function means is also arranged to interface with the traffic control function means (21) to route calls to the serving MSC if the serving MSC is not the direct access node (44).

13. The system for interworking a cellular telecommunications network with a packet data network of claim 7 wherein the DAU (43) is co-located with the serving MSC (44).

14. The system for interworking a cellular telecommunications network with a packet data network of claim 7 wherein the DAU (43) is remotely located from the serving MSC (44).

15. The system for interworking a cellular telecommunications network with a packet data network of claim 7 wherein the foreign agent (53) is implemented in the data network (13), and the mobile terminal location information to be stored by the foreign agent is an address (62) for the DAU (43).

## Patentansprüche

1. Verfahren zum Zusammenwirken eines zellularen Telekommunikationsnetzwerks mit einem Paketdaten-Netzwerk (13), welches die Schritte umfaßt:
- Einrichtung einer schaltungsvermittelten Verbindung von einem mobilen Anschluß (11), die zwischen dem zellularen Netzwerk und dem Datennetzwerk (13) funktioniert,
- Durchführung eines Registrierungsprozesses im Datennetzwerk (13) für den mobilen Anschluß (11),
- Einrichtung eines Mobilitätszusammenhangs im Datennetzwerk (13) für den mobilen Anschluß,
- Aufrechterhaltung des Mobilitätszusammenhangs für den mobilen Anschluß (11) im Datennetzwerk (13), sogar dann, nachdem die schaltungsvermittelte Verbindung gelöst wurde, und
- wenn ein die Funkverbindung beendender Datenaufruf im Datennetzwerk erhalten wurde, Wiedereinrichtung der schaltungsvermittelten Verbindung auf der Grundlage des im Datennetzwerk (13) aufrechterhaltenen Mobilitätszusammenhangs zur Weiterleitung des Anrufs zum mobilen Anschluß.

2. Verfahren zum Zusammenwirken eines zellularen Telekommunikationsnetzwerks mit einem Paketdaten-Netzwerk (13) nach Anspruch 1, bei dem der Schritt der Einrichtung eines Mobilitätszusammenhangs für den mobilen Anschluß (11) die Schritte umfaßt:
- Speicherung von Ortsinformation für den mobilen Anschluß (11) in einem Foreign Agent und
- Speicherung einer Adresse für den Foreign Agent in einem Home Agent im Datennetzwerk.

3. Verfahren zum Zusammenwirken eines zellularen Telekommunikationsnetzwerks mit einem Paketdaten-Netzwerk nach Anspruch 2, welches ferner die Schritte umfaßt:
- Erzeugung eines Datenaufrufs im Datennetzwerk (13) zum mobilen Anschluß (11),
- Bestimmung, ob die schaltungsvermittelte Verbindung unterbrochen wurde,
- Einrichtung einer schaltungsvermittelten Verbindung mit dem mobilen Anschluß (11) unter Verwendung der im Foreign Agent gespeicherten Ortsinformation nach der Feststellung, dass die schaltungsvermittelte Verbindung unterbrochen wurde, und
- Weiterleitung des Datenaufrufs zum mobilen Anschluß (11).

4. System zum Zusammenwirken eines zellularen Telekommunikationsnetzwerks mit einem Paketdaten-Netzwerk (13), welches umfaßt:
- eine Einrichtung zur Einrichtung einer schaltungsvermittelten Verbindung von einem mobilen Anschluß (11) die zwischen dem zellularen Netzwerk und dem Datennetzwerk (13) funktioniert,
- Registrierungseinrichtung zur Registrierung des mobilen Anschlusses (11) im Datennetzwerk (13),
- Einrichtung zur Einrichtung eines Mobilitätszusammenhangs für den mobilen Anschluß (11) im Datennetzwerk (13),
- Einrichtung zur Aufrechterhaltung des Mobilitätszusammenhangs für den mobilen Anschluß (11) im Datennetzwerk (13), auch nachdem die schaltungsvermittelte Verbindung gelöst wurde, und
- Einrichtung zum Empfang eines die Funkverbindung beendenden Datenaufrufs, wobei die Einrichtung zur Einrichtung der schaltungsvermittelten Verbindung ferner zur Wiedereinrichtung der schaltungsvermittelten Verbindung auf der Grundlage des im Datennetzwerk (13) aufrechterhaltenen Mobilitätszusammenhangs betrieben werden kann, um nach dem Empfang des die Funkverbindung beendenden Datenaufrufs an der Einrichtung zum Empfang eines die Funkverbindung beendenden Datenaufrufs, den Anruf zum mobilen Anschluß weiterzuleiten.

5. System zum Zusammenwirken eines zellularen Telekommunikationsnetzwerks mit einem Paketdaten-Netzwerk nach Anspruch 4, bei dem die Einrichtung zur Einrichtung eines Mobilitätszusammenhangs für den mobilen Anschluß enthält:
- einen Foreign Agent (53), der zur Speicherung von Ortsinformationen für den mobilen Anschluß (11) betrieben werden kann, und
- einen Home Agent im Datennetzwerk (13), der zur Speicherung einer Adresse für den Foreign Agent betrieben werden kann.

6. System zum Zusammenwirken eines zellularen Telekommunikationsnetzwerks mit einem Paketdaten-Netzwerk nach Anspruch 5, welches ferner umfaßt:
- eine Einrichtung im Datennetzwerk (13) zur Feststellung, dass an den mobilen Anschluß (11) ein Datenaufruf gerichtet wurde,
- eine Einrichtung zur Feststellung, ob die schaltungsvermittelte Verbindung unterbrochen wurde,
- eine weitere schaltungsvermittelte VerbindungsEinrichtung zur Einrichtung einer Verbindung mit dem mobilen Anschluß (11) unter Verwendung der im Foreign Agent (53) gespeicherten Ortsinformation (54) nach der Feststellung, dass die schaltungsvermittelte Verbindung unterbrochen wurde, und
- eine Einrichtung zur Weiterleitung des Datenaufrufs an den mobilen Anschluß (11).

7. System zum Zusammenwirken eines zellularen Telekommunikationsnetzwerks mit einem Paketdaten-Netzwerk nach Anspruch 6, welches enthält:
- einen Direktzugriffsknoten (44) zwischen dem mobilen Anschluß (11) und dem Datennetzwerk (13), wobei der Direktzugriffsknoten (44) umfaßt:
- eine bedienende Funkvermittlungsstelle (MSC) (44), die über eine Basisstation (42) mit dem mobilen Anschluß (11) verbunden ist,
- eine Zusammenwirkungseinheit (IWU) (17), die mit der Vermittlungsstelle (44) verbunden ist, und
- eine Direktzugriffseinheit (DAU) (43), die mit der Zusammenwirkungseinheit (17) und mit dem Datennetzwerk (13)verbunden ist.

8. System zum Zusammenwirken eines zellularen Telekommunikationsnetzwerks mit einem Paketdaten-Netzwerk nach Anspruch 7, bei dem die Direktzugriffseinheit (43) auch einen Zugriffs-Router (52) enthält und der Foreign Agent (53) im Zugriffs-Router (52) implementiert wird.

9. System zum Zusammenwirken eines zellularen Telekommunikationsnetzwerks mit einem Paketdaten-Netzwerk nach Anspruch 8, bei dem die Ortsinformation (54) über den mobilen Anschluß, die im Foreign Agent (53) zu speichern ist, eine MCS-Zahl der bedienenden MSC ist.

10. System zum Zusammenwirken eines zellularen Telekommunikationsnetzwerks mit einem Paketdaten-Netzwerk nach Anspruch 8, bei dem die Direktzugriffseinheit (43) ferner eine schaltungsvermittelte Adapter- und Steuerfunktionseinrichtung (51) enthält, die so ausgeführt ist, dass sie die Zusammenwirkungseinheit und eine Verkehrsregelfunktionseinrichtung (21) im Direktzugriffsknoten (44) mit dem Zugriffs-Router (52) verbindet.

11. System zum Zusammenwirken eines zellularen Telekommunikationsnetzwerks mit einem Paketdaten-Netzwerk nach Anspruch 10, bei dem die Zusammenwirkungseinheit (17) eine von mehreren Zusammenwirkungseinheiten in einem Pool von Zusammenwirkungseinheiten ist, und die schaltungsvermittelte Adapter- und Steuerfunktionseinrichtung (51) ein Steuerteil enthält, das so ausgeführt ist, dass es mit der Verkehrsregelfunktionseinrichtung (21) eine Schnittstelle bildet und eine Zusammenwirkungseinheit (17) aus dem Pool von Zusammenwirkungseinheiten auswählt, wenn die bedienende MSC der Direktzugriffsknoten (44) ist.

12. System zum Zusammenwirken eines zellularen Telekommunikationsnetzwerks mit einem Paketdaten-Netzwerk nach Anspruch 11, bei dem das Steuerteil der schaltungsvermittelten Adapter- und Steuerfunktionseinrichtung ferner so ausgeführt ist, dass es mit der Verkehrsregelfunktionseinrichtung (21) eine Schnittstelle bildet und Anrufe zur bedienenden MSC lenkt, wenn diese nicht der Direktzugriffsknoten (44) ist.

13. System zum Zusammenwirken eines zellularen Telekommunikationsnetzwerks mit einem Paketdaten-Netzwerk nach Anspruch 7, bei dem die Direktzugriffseinheit (43) und die bedienende MSC (44) den gleichen Standort haben.

14. System zum Zusammenwirken eines zellularen Telekommunikationsnetzwerks mit einem Paketdaten-Netzwerk nach Anspruch 7, bei dem die Direktzugriffseinheit (43) von der bedienenden MSC (44) entfernt angeordnet ist.

15. System zum Zusammenwirken eines zellularen Telekommunikationsnetzwerks mit einem Paketdaten-Netzwerk nach Anspruch 7, bei dem der Foreign Agent (53) im Datennetzwerk (13) implementiert ist und die Ortsinformation über den mobilen Anschluß, die vom Foreign Agent (53) zu speichern ist, eine Adresse (62) für die Direktzugriffseinheit (43) ist.

## Revendications

1. Procédé d'interfonctionnement d'un réseau cellulaire de télécommunications et d'un réseau de données en paquets (13), comprenant les étapes consistant à :
établir une connexion à commutation de circuits depuis un terminal mobile (11) opérant dans le réseau cellulaire vers le réseau de données (13) ;
exécuter un processus d'enregistrement dans le réseau de données (13), pour le terminal mobile (11) ;
établir, dans le réseau de données (13), un contexte de mobilité pour le terminal mobile ;
maintenir le contexte de mobilité pour le terminal mobile (11) dans le réseau de données (13), même si la connexion à commutation de circuits est libérée ; et
lorsqu'un appel de données d'arrivée pour le mobile est reçu dans le réseau de données, rétablir la connexion à commutation de circuits, sur base du contexte de mobilité maintenu dans le réseau de données (13), pour fournir l'appel au terminal mobile.

2. Procédé d'interfonctionnement d'un réseau cellulaire de télécommunications et d'un réseau de données en paquets selon la revendication 1, dans lequel l'étape consistant à établir un contexte de mobilité pour le terminal mobile (11) comprend les étapes consistant à :
stocker, dans un agent hors circonscription, des informations sur l'emplacement pour le terminal mobile (11) ; et
stocker, dans un agent de rattachement dans le réseau de données, une adresse pour l'agent hors circonscription.

3. Procédé d'interfonctionnement d'un réseau cellulaire de télécommunications et d'un réseau de données en paquets selon la revendication 2, comprenant en outre les étapes consistant à :
générer un appel de données dans le réseau de données (13) adressé au terminal mobile (11) ;
déterminer si la connexion à commutation de circuits a été déconnectée;
établir une connexion à commutation de circuits vers le terminal mobile (11) en utilisant les informations sur l'emplacement, stockées dans l'agent hors circonscription, s'il a été déterminé que la connexion à commutation de circuits a été déconnectée ; et
fournir l'appel de données au terminal mobile (11).

4. Système d'interfonctionnement d'un réseau cellulaire de télécommunications et d'un réseau de données en paquets (13), ledit système comprenant :
des moyens pour établir une connexion à commutation de circuits depuis un terminal mobile (11) opérant dans le réseau cellulaire vers le réseau de données (13) ;
des moyens d'enregistrement pour enregistrer le terminal mobile (11) dans le réseau de données (13) ;
des moyens pour établir, dans le réseau de données (13), un contexte de mobilité pour le terminal mobile (11) ;
des moyens pour maintenir le contexte de mobilité pour le terminal mobile (11) dans le réseau de données (13), même si la connexion à commutation de circuits est libérée ; et
des moyens pour recevoir un appel de données d'arrivée pour le mobile, dans lequel les moyens pour établir la connexion à commutation de circuits sont en outre capables de rétablir la connexion à commutation de circuits, sur base du contexte de mobilité maintenu dans le réseau de données (13), pour fournir l'appel au terminal mobile, lors de la réception de l'appel de données d'arrivée pour le mobile, au niveau des moyens pour recevoir un appel de données d'arrivée pour le mobile.

5. Système d'interfonctionnement d'un réseau cellulaire de télécommunications et d'un réseau de données en paquets selon la revendication 4, dans lequel les moyens pour établir un contexte de mobilité pour le terminal mobile comprennent :
un agent hors circonscription (53), utilisable pour stocker des informations sur l'emplacement pour le terminal mobile (11) ; et
un agent de rattachement dans le réseau de données (13), utilisable pour stocker une adresse pour l'agent hors circonscription.

6. Système d'interfonctionnement d'un réseau cellulaire de télécommunications et d'un réseau de données en paquets selon la revendication 5, comprenant en outre :
des moyens dans le réseau de données (13) pour déterminer qu'un appel de données est adressé au terminal mobile (11) ;
des moyens pour déterminer si la connexion à commutation de circuits a été déconnectée ou non ;
d'autres moyens de connexion à commutation de circuits pour établir une connexion vers le terminal mobile (11) en utilisant les informations sur l'emplacement (54) stockées dans l'agent hors circonscription (53), s'il a été déterminé que la connexion à commutation de circuits a été déconnectée ; et
des moyens pour fournir l'appel de données au terminal mobile (11).

7. Système d'interfonctionnement d'un réseau cellulaire de télécommunications et d'un réseau de données en paquets selon la revendication 6, dans lequel le système inclut un noeud à accès direct (44) entre le terminal mobile (11) et le réseau de données (13), le noeud à accès direct (44) comprenant :
un centre de commutation de mobile MSC de desserte (44), connecté au terminal mobile (11) par l'intermédiaire d'une station de base (42) ;
une unité d'interfonctionnement IWU (17) connectée au MSC (44) ; et
une unité à accès direct DAU (43) connectée à l'IWU (17) et au réseau de données (13).

8. Système d'interfonctionnement d'un réseau cellulaire de télécommunications et d'un réseau de données en paquets selon la revendication 7, dans lequel la DAU (43) inclut également un dispositif d'acheminement d'accès (52), et l'agent hors circonscription (53) est mis en oeuvre dans le dispositif d'acheminement d'accès (52).

9. Système d'interfonctionnement d'un réseau cellulaire de télécommunications et d'un réseau de données en paquets selon la revendication 8, dans lequel les informations d'emplacement (54) du terminal mobile devant être stockées par l'agent hors circonscription (53) sont un numéro MSC pour le MSC de desserte.

10. Système d'interfonctionnement d'un réseau cellulaire de télécommunications et d'un réseau de données en paquets selon la revendication 8, dans lequel la DAU (43) inclut également un moyen d'adaptation à commutation de circuits et de fonctions de commande (51), agençé pour connecter l'IWU et des moyens de fonctions de commande de trafic (21) dans le noeud à accès direct (44), au dispositif d'acheminement d'accès (52).

11. Système d'interfonctionnement d'un réseau cellulaire de télécommunications et d'un réseau de données en paquets selon la revendication 10, dans lequel l'IWU (17) est l'une d'une pluralité d'IWU dans un groupe d'IWU, et le moyen d'adaptation à commutation de circuits et de fonctions de commande (51) inclut une partie commande agençée pour constituer l'interface avec les moyens de fonctions de commande de trafic (21) pour sélectionner une IWU (17) à partir du groupe d'IWU, si le MSC de desserte est le noeud à accès direct (44).

12. Système d'interfonctionnement d'un réseau cellulaire de télécommunications et d'un réseau de données en paquets selon la revendication 11, dans lequel la partie commande du moyen d'adaptation à commutation de circuits et de fonctions de commande est également agençée pour constituer l'interface avec les moyens de fonctions de commande de trafic (21) pour acheminer des appels vers le MSC de desserte, si le MSC de desserte n'est pas le noeud à accès direct (44).

13. Système d'interfonctionnement d'un réseau cellulaire de télécommunications et d'un réseau de données en paquets selon la revendication 7, dans lequel la DAU (43) est installée au même endroit que le MSC de desserte (44).

14. Système d'interfonctionnement d'un réseau cellulaire de télécommunications et d'un réseau de données en paquets selon la revendication 7, dans lequel la DAU (43) est située à distance du MSC de desserte (44).

15. Système d'interfonctionnement d'un réseau cellulaire de télécommunications et d'un réseau de données en paquets selon la revendication 7, dans lequel l'agent hors circonscription (53) est mis en oeuvre dans le réseau de données (13), et les informations sur l'emplacement du terminal mobile, devant être stockées par l'agent hors circonscription, sont une adresse (62) pour la DAU (43).
